# EUROPÄISCHE PATENTANMELDUNG

(11) **EP 3 244 425 A1**
(43) Veröffentlichungstag der Anmeldung: **15.11.2017**
(21) Anmeldenummer: 17156978.3
(22) Anmeldetag: 20.02.2017
(51) Int. Cl.: H01F 7/08, H01F 7/127, H01F 7/128

(54) **POLROHR FÜR ELEKTROMAGNETE UND MAGNETVENTILE, UND VERFAHREN SOWIE VORRICHTUNG ZU DESSEN HERSTELLUNG**

(30) Priorität: 23.02.2016 DE 102016103168
(71) Anmelder: Rausch und Pausch GmbH, 95100 Selb (DE)
(72) Erfinder: BÄHR, Sebastian, 07926 Gefell (DE); KEMNITZ, Rocco, 08606 Bobenneukirchen (DE)
(74) Vertreter: Klunker IP Patentanwälte PartG mbB

(57) **Zusammenfassung**

Die Erfindung betrifft ein Verfahren zur Herstellung eines Polrohrs (34), mit zwei magnetischen Polrohrbauteilen (20, 26), für einen Elektromagneten (40), insbesondere für ein Magnetventil eines Automatikgetriebes in einem Kraftfahrzeug, umfassend die folgenden Schritte: (a) Anordnen (S10a) der Polrohrbauteile (20, 26) auf einem Zentrierdorn (10); und (b) Verbinden, insbesondere Umspritzen (530) und/oder Vergießen einer äußeren Mantelfläche der Polrohrbauteile (20, 26); wobei der Zentrierdorn (10) eine radial ausdehnbare, auch im gedehnten Zustand geschlossene Zylinderoberfläche aufweist. Die Erfindung betrifft weiter ein, insbesondere mit dem Verfahren erhältliches, Polrohr (34), einen Elektromagnet (40) für ein Magnetventil, insbesondere für ein Automatikgetriebe in einem Kraftfahrzeug, mit einem erfindungsgemäßen Polrohr (34), und eine Vorrichtung zur Herstellung des Polrohrs (34).

## Beschreibung

Die Erfindung betrifft im Allgemeinen Elektromagnete und Magnetventile. Im Besonderen betrifft die Erfindung ein Verfahren zur Herstellung eines Polrohres für Elektromagnete und Magnetventile, ein solches Polrohr, einen Elektromagneten mit einem solchen Polrohr sowie eine Vorrichtung zur Herstellung des Polrohres.

Polrohre für Elektromagnete, insbesondere für Magnetventile in Kfz-Automatikgetrieben sind sowohl in einteiliger als auch mehrteiliger Ausführung bekannt. Einteilige Polrohre, wie beispielsweise in der DE 10 2006 015 233 B4 beschrieben, sind vorteilhaft hinsichtlich der Möglichkeit einer reibungsarmen Führung des Magnetankers und eines geringen radialen Luftspalts zur inneren Mantelfläche des Polrohres. Dies wird durch die unterbrechungsfreie oder spaltfreie Bauweise des Polrohres ermöglicht, wodurch die innere Mantelfläche direkt als Führungsfläche für den Anker genutzt werden kann. Zur Unterdrückung eines magnetischen Kurzschlusses über das Polrohr wird dieses üblicherweise an einer Stelle dünn gedreht.

Bei allen mehrteiligen Polrohren wird die magnetische Trennung des Polrohres durch ein amagnetisches Material sichergestellt. Die Trennung des Polrohres kann durch ein separates Teil in Form einer eingepressten Hülse oder, wie beispielsweise in der DE 10 2006 015 070 A1 beschrieben, durch einen eingeschweißten amagnetischen Ring in das Polrohr integriert werden. Vorteilhaft bei der mehrteiligen Ausführung des Polrohrs ist die Vermeidung des magnetischen Kurzschlusses über das Polrohr. Damit sollten grundsätzlich höhere Magnetkräfte erreicht werden können.

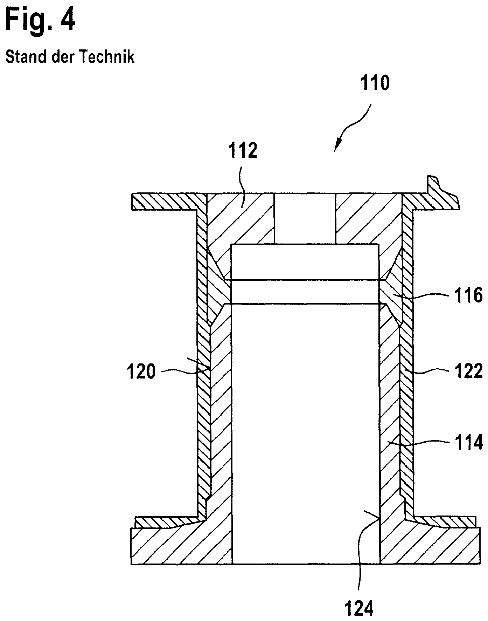

Figur 4 zeigt eine aus der DE 10 2013 226 619 A1 bekannte Verbindung zweier Polrohrhälften mittels eines amagnetischen Rings und Verguss mit einer äußeren als Wicklungsträger für eine Spulenwicklung dienenden Kunststoffschicht. Das Polrohr 110 besteht aus einem Polkern 112, einem Magnetrohr 114 sowie einem dazwischen angeordneten amagnetischen Ring 116 als Polrohrteile. Bei der Herstellung werden die Polrohrteile auf einen Zentrierdorn gesteckt und dabei konzentrisch zueinander angeordnet. Danach wird eine äußere Mantelfläche 120 der Polrohrteile beispielsweise mit einem Kunststoff umspritzt. Figur 4 zeigt das Polrohr 110 mit der auf der äußeren Mantelfläche 120 aufgebrachten Umspritzschicht 122.

Aufgrund von Durchmessertoleranzen bei den Polrohrteilen ist ein Versatz zwischen den jeweils zueinander benachbarten Polrohrteilen an der im Inneren des Polrohrs 110 gebildeten Ankerlauffläche 124 unvermeidbar. Damit kann keine versatzfreie Innenoberfläche für das Polrohr erreicht werden. Der radiale Luftspalt zwischen Ankerlauffläche 124 und einem (in Figur 4 nicht gezeigten) im Polrohr 110 verschiebbar angeordneten Magnetanker kann daher nicht beliebig klein eingestellt werden. D. h., eine klemmfreie Führung des Magnetankers direkt oder mittels einer zusätzlichen PTFE-Folie im Polrohr 110 kann nur bei einem entsprechend größer dimensionierten radialen Führungsspalt auf Kosten der zu erreichenden Magnetkraft sichergestellt werden. Um dies zu vermeiden, könnte das montierte Polrohr nachgearbeitet werden. Dies ist aus wirtschaftlicher Sicht nicht erstrebenswert. Ein weiterer Nachteil eines mehrteiligen Pohlrohrs mit Zwischenring 116 sind die damit verbundenen Produktions- und Montagekosten.

Aufgabe der vorliegenden Erfindung ist es, ein Polrohr sowie ein Verfahren zur Herstellung eines Polrohres vorzuschlagen, bei dem sich möglichst die Vorteile der einteiligen und zweiteiligen Ausführung eines Polrohrs bei möglichst weitest gehender Meidung der vorstehend diskutierten Nachteile erreichen lassen.

Die Aufgabe wird jeweils mit den jeweiligen Merkmalen eines der unabhängigen Ansprüche gelöst. Weitere Ausführungsbeispiele und vorteilhafte Weiterbildungen sind in den sich jeweils anschließenden Unteransprüchen definiert.

Merkmale und Details, die im Zusammenhang mit dem erfindungsgemäßen Verfahren zur Herstellung eines Polrohrs beschrieben sind, gelten entsprechend für die Vorrichtung zur Herstellung des Polrohres und selbstverständlich auch im Zusammenhang mit dem erfindungsgemäßen Polrohr (sowie einem Elektromagneten mit einem solchen Polrohr) und jeweils umgekehrt. Daher wird bezüglich der Offenbarung der einzelnen Aspekte zur Vermeidung von Wiederholungen wechselseitig Bezug genommen.

Das erfindungsgemäße Verfahren zur Herstellung eines Polrohrs, mit zwei magnetischen (d. h., magnetisch leitfähigen) Polrohrbauteilen, für einen Elektromagneten, insbesondere für ein Magnetventil eines Automatikgetriebes in einem Kraftfahrzeug, umfasst die folgenden Schritte: (a) Anordnen der Polrohrbauteile auf einem Zentrierdorn; (b) Verbinden, insbesondere Umspritzen und/oder Vergießen, einer äußeren Mantelfläche der Polrohrbauteile, vorzugsweise mit einem amagnetischen (d. h., magnetisch nicht leitfähigen) Material; wobei erfindungsgemäß der Zentrierdorn eine radial ausdehnbare, auch im gedehnten Zustand geschlossene Zylinderoberfläche aufweist.

Der radial dehnbare Zentrierdorn kann nach Art eines Dehnspanndorns ausgeführt sein. Unter einem radial dehnbaren Zentrierdorn wird hier im Kontext der Erfindung ein zylinderförmiges Element mit einer radial ausdehnbaren auch im gedehnten Zustand geschlossenen Zylinderoberfläche verstanden. Dabei kann es sich um einen aus dem Bereich der Werkzeugmaschinen bekannten Dehnspanndorn, beispielsweise einen hydraulischen Dehnspanndorn, wie er zum Spannen von Werkstücken in Drehmaschinen bekannt ist, handeln. Die Erfindung ist aber nicht auf diese bestimmte Art eines Dehnspanndorns beschränkt, sondern es können auch andere Möglichkeiten zum radialen Spannen von innen nach außen mit auch im ausgedehnten Zustand geschlossener Zylinderfläche zur Anwendung kommen.

Die Polrohrbauteile sind vorteilhafterweise ein magnetisches Polkernrohr und ein magnetisches Magnetrohr. Die Anordnung der Polrohrbauteile erfolgt vorzugsweise konzentrisch zu einer Mittellängsachse des Polrohrs und des radial dehnbaren Zentrierdorns.

Das Polkernrohr kann einen Polkern aufweisen oder zur Aufnahme eines Polkerns oder zur Verbindung mit einem Polkern eingerichtet sein.

Das Polkernrohr und/oder das Magnetrohr kann bzw. können vorzugsweise jeweils vom Polrohr wegweisend mit einem Flansch ausgeführt sein.

Zur späteren Aufnahme eines Magnetankers weisen die beiden Polrohrbauteile eine Durchgangsbohrung auf, welche vorzugsweise denselben Innendurchmesser aufweisen. Sobald die Polrohrbauteile umspritzt und/oder vergossen sind, bilden die beiden Polrohrbauteile einen Magnetraum zur Aufnahme des im Polrohr verschieblich angeordneten Magnetankers.

Im Schritt (a) werden bevorzugt die Polrohrbauteile auf dem radial dehnbaren Zentrierdorn mit einem Abstand zueinander derart angeordnet, dass zwischen den Polrohrbauteilen in axialer Richtung ein zur magnetischen Trennung der Polrohrbauteile ausreichender Spalt gebildet wird.

Nach Schritt (a), in welchem die Polrohrbauteile auf dem radial dehnbaren Zentrierdorn angeordnet wurden, folgt ein Schritt mit radialem Dehnen einer Zylindermantelfläche des Zentrierdorns. D. h., der Außendurchmesser des Zentrierdorns wird, beispielsweise durch Bereitstellung eines entsprechenden hydraulischen Druckes im Inneren des Zentrierdorns vergrößert. Dadurch wird erreicht, dass der Spalt zwischen den Polrohrbauteilen mittels der Mantelfläche des Zentrierdorns mit den jeweiligen Innenflächen der Polrohrbauteile fluchtend zum Inneren des Polrohrs verschlossen ist. Mit anderen Worten stellt der radial dehnbare Zentrierdorn erfindungsgemäß eine radial ausdehnbare Zylindermantelfläche zum innenseitigen versatzfreien Verschließen des Spalts zwischen den zwei spaltbildend aneinandergrenzenden Rohren, nämlich Magnetrohr und Polkernrohr, bereit.

In Schritt (b) werden die äußeren Mantelflächen der Polrohrbauteile dadurch dauerhaft verbunden, dass sie mit einem amagnetischen Material umspritzt und/oder vergossen werden, welches ebenso den Spalt zwischen den Polrohrbauteilen vollständig ausfüllt.

Dadurch, dass die Mantelfläche des Zentrierdorns an den Innenoberflächen der den Spalt bildenden Polrohrbauteile aufgrund der radialen Dehnung des Zentrierdorns passgenau anliegt, ergibt sich jeweils ein ebenflächiger, d. h. versatzfreier, Übergang zwischen der Innenoberfläche der Polrohrbauteile und einer Innenoberfläche des den Spalt ausfüllenden amagnetischen Materials.

In vorteilhafter Weise können aufgrund der perfekten Zentrierung der Polrohrbauteile mittels der radialen Dehnung des Zentrierdorns gegebenenfalls vorhandene Durchmessertoleranzen zwischen den Polrohrbauteilen durch einen versatzfreien Übergang zwischen der Innenoberfläche der Polrohrbauteile und dem den Spalt ausfüllenden amagnetischen Material ausgeglichen werden. D. h., durch den Einsatz des radial dehnbaren Zentrierdorns kann eine nahezu toleranzfreie Ausrichtung der Polrohrbauteile aufeinander und damit eine nahezu perfekt verlaufende Innenoberfläche des geschaffenen Polrohrs erreicht werden.

Im Ergebnis bildet das den Spalt ausfüllende amagnetische Material zusammen mit den Innenoberflächen der Polrohrbauteile eine durchgängig ebene Innenoberfläche des Pohlrohrs. Damit kann der radiale Luftspalt zwischen dem später einzusetzenden Magnetanker und der Innenoberfläche des Polrohrs entsprechend klein dimensioniert werden. Folglich lassen sich eine besonders hohe Magnetkraft in einem das Polrohr enthaltenden Elektromagneten oder Magnetventil erzeugen.

Bevorzugt werden die Polrohrbauteile so mit dem amagnetischen Material, beispielsweise einem Kunststoff, umspritzt und/oder vergossen, dass das amagnetische Material als Wicklungsträger zur Aufnahme einer Spule für den zu bildenden Elektromagneten dienen kann.

Durch das Vergießen und/oder Umspritzen wird ein form- und kraftschlüssiger Verbund der gesamten Baugruppe Polrohr geschaffen, der durch entsprechende Konturierung der Polrohrbauteile, beispielsweise eine Rändelung oder Nuten, noch unterstützt werden kann.

Nach Aushärten des umspritzten und/oder vergossenen amagnetischen Materials wird die radiale Dehnung des Zentrierdorns in einem Schritt (c) aufgehoben. Dann kann das fertige Polrohr vom Dehnspanndorn abgenommen werden.

Falls das Polkernrohr nicht bereits einen Polkern aufweisen sollte, kann sich an den Schritt (c) ein Schritt (d) anschließen, in welchem ein Polkern in das Polkernrohr an einem Ende des Polrohrs eingefügt wird.

Im Ergebnis wird mit dem erfindungsgemäßen Herstellungsverfahren ein Polrohr geschaffen, das bezüglich der Lauffehler für einen Magnetanker im Magnetraum des Polrohrs nahezu perfekt ist.

Damit kann vor allem der Luftspalt zwischen einem Magnetanker und dem Polkern, d. h. der Radialluftspalt in der vom Polkernrohr gebildeten Tauchstufe und der radiale Luftspalt zwischen einem beweglichen Magnetanker und dem Magnetrohr, dem Nebenluftspalt, besonders klein eingestellt werden. Bei einem mit dem erfindungsgemäßen Herstellungsverfahren hergestellten Polrohr mit besonders kleinem radialen Luftspalt sowohl in der Tauchstufe als auch im Nebenluftspalt können besonders hohe Magnetkräfte realisiert werden.

Ebenfalls kann eine reibungsarme Lagerung eines Magnetankers im Polrohr erreicht werden, da die magnetischen Querkräfte aufgrund von Exzentrizitäten der Polrohrbauteile im Stand der Technik nahezu vermieden werden können und jeweils an den Übergängen zwischen den Pohlrohrbauteilen kein Versatz auftreten kann, der die Ankerbewegung behindern könnte.

Schließlich entfällt eine Nacharbeitung der den Magnetraum begrenzenden Ankerlaufflächen, da im Gegensatz zum Verbinden der Polrohrbauteile mittels eines thermischen Fügeverfahrens, beispielsweise durch Schweißen oder Löten, keine thermischen Verspannungen in die Polrohrbauteile hervorgerufen werden.

Ein zweiter Aspekt der vorliegenden Erfindung betrifft ein Polrohr für einen Elektromagneten, insbesondere für ein Magnetventil eines Automatikgetriebes in einem Kraftfahrzeug. Bei dem Polrohr füllt erfindungsgemäß ein amagnetisches (d. h., magnetisch nicht leitfähiges) Material axial einen Spalt zwischen zwei, vorzugsweise magnetischen (d. h., magnetisch leitfähigen), Polrohrbauteilen aus. Die Polrohrbauteile sind konzentrisch zueinander angeordnet. Eine äußere Mantelfläche der Polrohrbauteile ist mit dem amagnetischen Material, insbesondere mit einem Kunststoff umgossen oder umspritzt, wobei das amagnetische Material zusammen mit den Polrohrbauteilen eine durchgängige ebenflächige Innenfläche des Polrohrs ausbildet.

Das erfindungsgemäße Polrohr ist durch eine Herstellung mittels des vorstehend diskutierten erfindungsgemäßen Herstellungsverfahrens gemäß dem ersten Aspekt der Erfindung erhältlich.

Vorzugsweise sind das Magnetrohr und das Polkernrohr aus einem magnetisch leitenden Stahlwerkstoff, beispielsweise durch spanende Bearbeitung (z. B. 1.0715), oder als Sinterteil (z. B. Sint D35) oder als Fließpressteil (z. B. 1.0303) hergestellt.

Vorzugsweise ist das amagnetische Material ein Kunststoff, z. B. PA 6.6 GF30.

Vorzugsweise weisen eine durch das amagnetische Material im Spalt gebildete Innenoberfläche des Polrohrs und jeweils die Innenoberfläche eines daran angrenzenden Polrohrbauteils an den jeweiligen Übergängen denselben Innendurchmesser auf. Mit anderen Worten laufen die Übergänge zwischen den Innenoberflächen der Polrohrbauteile und der Innenoberfläche des den Spalt ausfüllenden amagnetischen Materials versatzfrei ineinander über.

Vorzugsweise weist eines der Polrohrbauteile an einem Ende des Polrohrs einen Polkern auf oder ist, besonders vorzugsweise durch Fügen, mit dem Polkern, beispielsweise durch Einpressen, verbunden.

Ein dritter Aspekt der Erfindung betrifft einen Elektromagneten für ein Magnetventil, insbesondere für Automatikgetriebe in einem Kraftfahrzeug, der ein Polrohr gemäß dem zweiten Aspekt der Erfindung aufweist.

Vorzugsweise ist bei diesem Elektromagneten zwischen dem Polrohr und einer Mantelfläche eines im Polrohr angeordneten Magnetankers eine Lagerfolie, beispielsweise eine PTFE-Folie oder eine Kunststofffolie oder ein Kunststoff-Glasgewebe, angeordnet. Die Lagerfolie verhindert ein einseitiges Anlegen des Ankers an das Magnetrohr bzw. das Polkernrohr und reduziert damit magnetische Querkräfte und damit einhergehende unerwünschte Reibeffekte.

Vorzugsweise ist eine Spule, insbesondere eine Kupferdrahtwicklung um das das Polrohr umgebende amagnetische Material, welches als Wicklungsträger ausgeformt ist, angeordnet.

Schließlich betrifft ein vierter Aspekt der Erfindung eine Vorrichtung zur Herstellung eines Polrohrs, mit zwei magnetischen Polrohrbauteilen, für einen Elektromagneten, insbesondere für ein Magnetventil eines Automatikgetriebes in einem Kraftfahrzeug, umfassend: einen Zentrierdorn zum Anordnen der Polrohrbauteile; und eine Spritzgießform, welche auf dem Zentrierdorn angeordnete Polrohrbauteile umschließen kann, um eine äußere Mantelfläche der Polrohrbauteile durch Umspritzen und/oder Vergießen mittels eines Spritz- oder Vergussmaterials zu verbinden. Der Zentrierdorn weist erfindungsgemäß eine radial ausdehnbare, auch im gedehnten Zustand geschlossene Zylinderoberfläche nach Art eines Dehnspanndorns auf. Beispielsweise kann der Zentrierdorn als hydraulischer Dehnspanndorn ausgeführt sein. Die Vorrichtung ist weiter eingerichtet, vor dem Umspritzen und/oder Vergießen den Zentrierdorn radial so zu dehnen, dass im Bereich eines Spalts zwischen den Polrohrbauteilen eine Mantelfläche des Zentrierdorns den Spalt mit den jeweilig angrenzenden Innenflächen der Polrohrbauteile ebenflächig und/oder versatzfrei abschließt.

Zusammenfassend kann festgestellt werden, dass mit dem erfindungsgemäßen Herstellverfahren für ein Polrohr sowie die erfindungsgemäße Vorrichtung zur Herstellung eines Polrohrs, ein Polrohr mit einer magnetischen Trennung des Polrohrs für eine optimale Magnetkreisausnutzung bei gleichzeitiger Realisierung einer durchgängigen inneren Mantelfläche für eine reibungsarme Führung eines Magnetankers bei einem engen radialen Luftspalt erreicht werden kann. Dabei ist die Herstellung des mehrteiligen Polrohrs in einem Montageschritt, besonders ohne Erfordernis eines Nacharbeitens möglich. Besonders kann auf ein separates amagnetisches Teil, beispielsweise den aus dem eingangs diskutierten Stand der Technik bekannten Zwischenring zur magnetischen Trennung des Polrohres verzichtet werden, wodurch die damit verbundenen Kosten vermieden werden. Diese Vorteile werden im Wesentlichen durch die Aufspannung und Zentrierung der Polrohrbauteile vor dem Umspritzen auf einem Zentrierdorn mit einer radial dehnbaren Zylindermantelfläche, die auch im gedehnten Zustand geschlossen ist, in einem entsprechend mit diesem Zentrierdorn ausgestatteten Spritzgießwerkzeug als Vorrichtung zum Herstellen des erfindungsgemäßen Polrohrs erreicht.

Weitere Vorteile, Merkmale und Einzelheiten der Erfindung ergeben sich aus der nachfolgenden Beschreibung, in der unter Bezugnahme auf die Zeichnungen Ausführungsbeispiele der einzelnen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale jeweils für sich oder zu mehreren in beliebiger Kombination Verwenden finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert um das Verständnis der vorliegenden Beschreibung nicht zu erschweren. Nachfolgend wird die Erfindung beispielhaft anhand der begleitenden Zeichnungen beschrieben. Darin zeigen:
- Figur 1: ein Flussdiagramm des erfindungsgemäßen Verfahrens zur Herstellung eines erfindungsgemäßen Polrohrs.
- Figur 2: einzelne Verfahrensschritte eines erfindungsgemäßen Verfahrens zur Herstellung eines erfindungsgemäßen Polrohrs.
- Figur 3: eine Ausführungsform eines erfindungsgemäßen Elektromagneten für ein Magnetventil.
- Figur 4: eine im Stand der Technik bekannte Verbindung zweier Polrohrhälften mittels eines amagnetischen Rings und Verguss mit einer äußeren Kunststoffschicht.

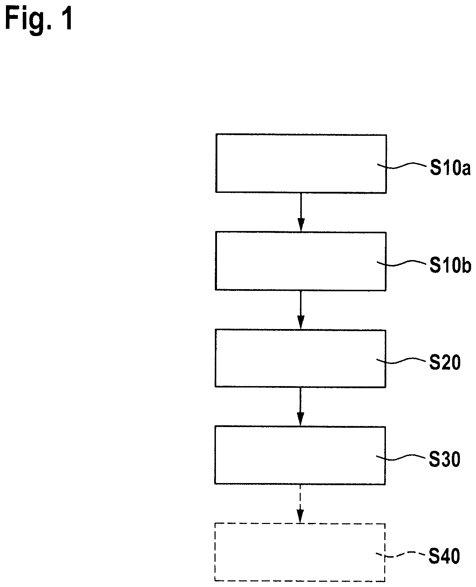

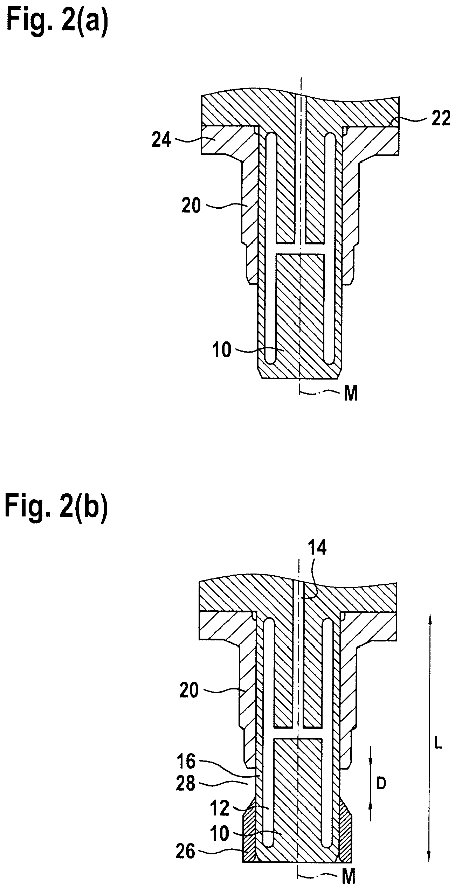

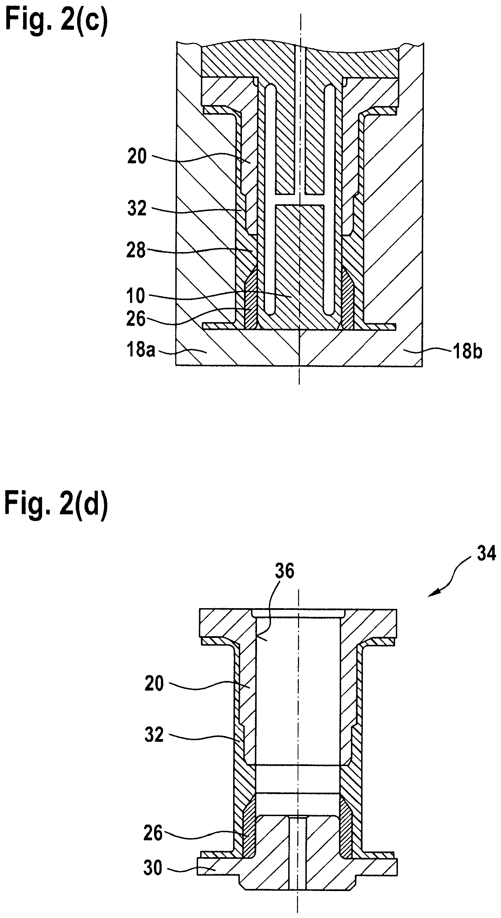

Figur 1 zeigt ein Flussdiagramm zu den in Figur 2 gezeigten Verfahrensschritten. In einem ersten Schritt S10a werden auf einem hydraulischen Dehnspanndorn, der eine mögliche Ausführung eines Zentrierdorns mit einer radial dehnbaren geschlossenen Zylindermantelfläche darstellt, Polrohrbauteile angeordnet. In Figur 2(a) ist auf den Dehnspanndorn 10 ein Magnetrohr 20, welches an einem ein Ende 22 des Polrohres bildenden Ende einen Flansch 24 aufweist, angeordnet.

Danach wird, wie in Figur 2(b) gezeigt, ein zweites Polrohrbauteil, nämlich ein Polkernrohr 26 auf den Dehnspanndorn 10 aufgesteckt. Dabei ist in Figur 2(b) gut zu erkennen, dass die Polrohrbauteile, nämlich das Magnetrohr 20 und das Polkernrohr 26 mit einem Abstand D zueinander auf dem Dehnspanndorn 10 angeordnet werden. Der Abstand D ist so gewählt oder eingestellt, dass zwischen den Polrohrbauteilen 20, 26 ein zur magnetischen Trennung der Polrohrbauteile ausreichender Spalt 28 gebildet wird. Das spaltbildende Anordnen ist der Schritt S10b der Figur 1.

Der Dehnspanndorn 10 als eine mögliche Ausführung eines Zentrierdorns mit einer radial dehnbaren und auch im gedehnten Zustand geschlossenen Zylindermantelfläche ist hinsichtlich seiner Funktionsweise und seines Aufbaus auf dem Gebiet der Werkstückspannung und Werkzeugspannung grundsätzlich bekannt und kann damit im Wesentlichen wie ein dort bekannter Hydrodehnspanndorn aufgebaut sein. Der in den Figuren 2(a) bis 2(d) vereinfacht dargestellte Dehnspanndorn 10 entspricht in seinem Aufbau und seiner Funktion einem zur Werkstückspannung bekannten Hydrodehnspanndorn.

Selbstverständlich kann anstelle des Dehnspanndorns 10 ein Zentrierdorn mit einer radial dehnbaren Zylindermantelfläche, die auch im gedehnten Zustand geschlossen ist, verwendet werden, wobei der Zentrierdorn jeden anderen beliebigen Aufbau aufweisen kann, solange damit der hier benötigte Effekt einer radial ausdehnbaren geschlossenen Zylinderoberfläche zum innenseitigen Verschließen des Spalts 28 zwischen den zwei spaltbildend aneinandergrenzenden Polrohrbauteilen 20, 26 bereitgestellt werden kann.

Im Inneren des Dehnspanndorns 10 befindet sich ein Kammersystem 12, in das über eine Zuleitung 14 ein Druckmittel, beispielsweise ein Hydrauliköl gepresst werden kann, wodurch der im Druckmittel aufgebaute Druck im Wesentlichen gegen die Innenwandung der dünnwandigen Dehnbuchse 16 wirkt. Als Folge dehnt sich die Dehnbuchse 16 entsprechend dem zugeführten Druck auf der gesamten Spannlänge L radial gleichmäßig, zentrisch und zylindrisch zur Mittelachse M aus. Dadurch werden die beiden Polrohrbauteile 20, 26 über ihren Innenflächen auf dem Dehnspanndorn zueinander zentriert. Das Dehnen des Dehnspanndorns 10 entspricht dem Schritt S20 in der Figur 1.

Im Gegensatz zu einer Zentrierung über Kegelflächen an einem Zwischenring, wie im Stand der Technik, wird hier mittels der Aufspannung auf den späteren Funktionsinnenoberflächen der Einfluss von Rundlauftoleranzen mindestens minimiert, idealerweise ausgeschlossen. Durch den Einsatz des hydraulischen Dehnspanndorns 10 werden die vorhandenen Durchmessertoleranzen zwischen den beiden Polrohrbauteilen perfekt über den gesamten Umfang der Polrohrbauteile verteilt, idealerweise ausgeglichen. Zusätzlich wir mittels des Dehnspanndorns 10 der den Spalt 28 bildende Bereich zwischen den beiden Polrohrbauteilen zum Inneren des herzustellenden Polrohrs spritzdicht oder dicht verschlossen und ebenflächig abgegrenzt.

In den in den Figuren 2(a) bis 2(d) gezeigten Ausschnitten aus dem erfindungsgemäßen Herstellungsverfahren wird, um die Spannung der Polrohrbauteile 20, 26 auf dem Dehnspanndorn 10 zu erleichtern ein Polkern 30 (vgl. Figur (d)) gegebenenfalls inklusive Flansch in vorteilhafter Weise erst nach dem Umspritzen mit dem fertigen Polrohr gefügt. Die offene Bauweise des Polrohrs bei der Herstellung, d. h., mit einer Durchgangsbohrung, erlaubt eine mittige Positionierung beider Polrohrbauteile auf dem hydraulischen Dehnspanndorn 10.

In Figur 2(c) ist der Schritt S30 der Figur 1 veranschaulicht, indem die Polrohrbauteile 20, 26 durch Umspritzen der äußeren Mantelfläche der Polrohrbauteile mit einem amagnetischen Material, beispielsweise einem Kunststoff, verbunden werden. Das amagnetische Material bildet, neben den Innenoberflächen der Polrohrbauteile 20, 26, im Bereich des Spalts 28 einen Teil der Innenoberfläche des Polrohrs. Dazu ist in Figur 2(c) dargestellt, dass die auf dem Dehnspanndorn 10 angeordneten Polrohrbauteile 20, 26 von zwei Hälften einer Spritzgussform 18a, 18b so umschlossen werden, dass der dadurch gebildete Raum zwischen den Polrohrbauteilen 20, 26, der Manteloberfläche des Dehnspanndorns 10 im Bereich des Spalts 28 sowie der Innenoberfläche der Spritzgussformteile 18a und 18b die Form eines Wicklungsträgers 32 aufweist. Dazu wird in diesem Raum in an sich bekannterweise ein amagnetisches Material, beispielsweise ein Kunststoff, in flüssiger Form eingespritzt und damit die äußeren Mantelflächen der Polrohrbauteile 20, 26 umspritzt und/oder vergossen. Damit werden die Polrohrbauteile 20, 26 dauerhaft verbunden.

Figur 2(d) zeigt das fertige Polrohr 34, bestehend aus dem Magnetrohr 20 und dem Polkernrohr 26, dem in das Polkernrohr 26 eingefügten Polkern 30 sowie dem die Polrohrbauteile 20, 26 verbindenden angespritzten/angegossenen Wicklungsträger 32. Besonders vorteilhaft ergibt sich durch das erfindungsgemäße Herstellverfahren eine nahezu versatzlose Innenoberfläche 36 für das Polrohr 34.

Vorzugsweise sind die Polrohrbauteile 20, 26 und der Polkern 30 aus einem magnetisch leitenden Stahlwerkstoff, beispielsweise durch spanende Bearbeitung (z. B. 1.0715), oder als ein Sinterteil (z. B. Sint D35) oder als ein Fließpressteil (z. B. 1.0303) hergestellt. Vorzugsweise ist das amagnetische Material ein Kunststoff, z. B. PA 6.6 GF30.

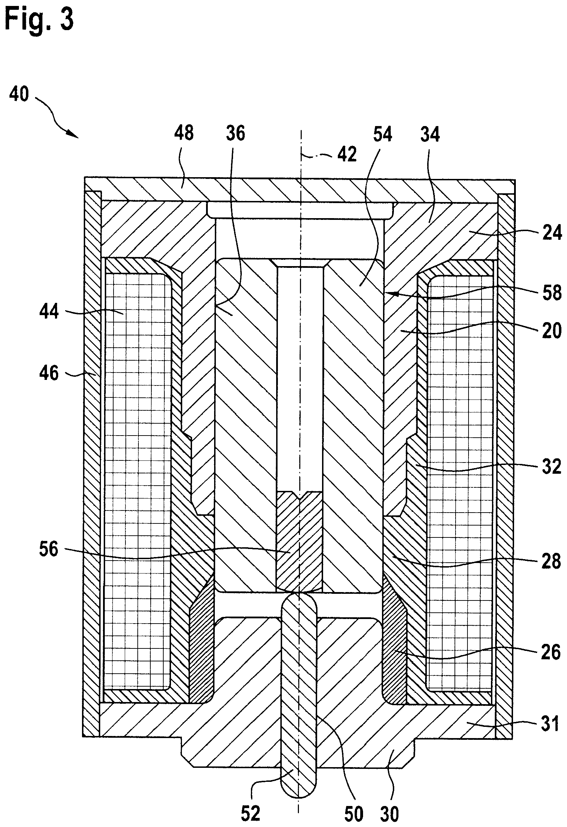

Figur 3 zeigt einen Schnitt durch einen erfindungsgemäßen Elektromagneten 40 für ein Magnetventil mit einem erfindungsgemäßen Polrohr 34, das vorzugsweise mit dem erfindungsgemäßen Herstellungsverfahren der Figuren 1 und 2 hergestellt worden ist.

Im Elektromagnet 40 ist das Polrohr 34 konzentrisch zu einer Mittellängsachse 42 des Elektromagneten 40 angeordnet. Wie in Figur 2(d) dargestellt, besteht das Polrohr 34 aus dem Magnetrohr 20, dem Polkernrohr 26 und dem darin an einem Ende eingefügten Polkern 30. Sowohl das Magnetrohr 20, das Polkernrohr 28 und der Polkern 30 sind aus einem magnetischen Material hergestellt.

Auf die äußeren Mantelflächen der Polrohrbauteile 20, 26 ist eine Umspritz- oder Vergussschicht aus einem amagnetischen Material, vorzugsweise Kunststoff, aufgespritzt. Diese Umspritz- oder Vergussschicht fungiert als Wicklungsträger 32 für eine darauf angeordnete Spule 44, beispielsweise in Form einer Kupferdrahtwicklung. Nach außen ist der Wicklungsträger 32 und die darauf getragene Spule 44 von einem zylindrischen Gehäuse 46 des Elektromagneten 40 eingefasst.

Auf der Seite des Polrohrs 34 mit dem Flansch 24 ist das Gehäuse 46 mit einem Deckel 48 verschlossen. An dem den Deckel 48 gegenüberliegenden anderen Polrohrende, an dem sich der Polkern 30 befindet, ist das Gehäuse 46 durch einen eine Flussscheibe 31 bildenden Bestandteil des Polkerns 30 ebenfalls verschlossen.

Der Polkern 30 weist eine zentrische Durchgangsbohrung 50 auf, in der ein Betätigungsstift 52, beispielsweise für ein Ventilelement, verschiebbar geführt ist. Ein Magnetanker 54 ist im Polrohr 34 an der eine Ankerlauffläche bildenden Innenoberfläche 36 des Polrohrs 34 gelagert. Der Betätigungsstift 52 ist durch den Magnetanker 34 oder etwas genauer durch einen mit dem Magnetanker 54 verbundenen Ankerbolzen 56 betätigbar.

Die Verbindung der beiden Polrohrbauteile 20, 26 mittels der Kunststoffumspritzung füllt den zur magnetischen Trennung der Polrohrbauteile vorgesehenen Spalt 28 vollständig aus. Die mit dem erfindungsgemäßen Verfahren durchgängige innere als Ankerlauffläche dienende Innenoberfläche 36 ist durchgängig und versatzfrei, sodass eine Führung des Magnetankers 54 bei minimalem radialen Luftspalt 58 möglich ist.

Abschließend sei angemerkt, dass die äußeren Manteloberflächen der Polrohrbauteile 20, 26 in den Figuren mit nicht gezeigten Oberflächenstrukturen, beispielsweise in Form von Rändelungen oder Nuten, vor dem Umspritzen versehen werden können, um eine bessere Verbindung der Polrohrbauteile 20, 26 mit dem amagnetischen Material zu erreichen.

Zur Zentrierung des Magnetankers 54 im Polrohr 34 mit definiertem radialem Luftspalt 58 zwischen äußerer Mantelfläche des Magentankers 54 und innerer Mantelfläche 36 des Polrohres 34 kann eine Lagerfolie (in der Figur nicht gezeigt), beispielsweise aus PTFE oder Kunststoff oder einem Kunststoff-Glasgewebe, zwischen der Innenoberfläche 36 des Polrohrs 34 und dem Magnetanker 54 vorgesehen werden. Damit wird ein mit hohen magnetischen Querkräften verbundenes einseitiges Anlegen des Magentankers 54 an die magnetisch leitenden Einzelteile des Polrohrs 34 vermieden.

## Patentansprüche

1. Verfahren zur Herstellung eines Polrohrs (34), mit zwei magnetischen Polrohrbauteilen (20, 26), für einen Elektromagneten (40), insbesondere für ein Magnetventil eines Automatikgetriebes in einem Kraftfahrzeug, umfassend die folgenden Schritte:
(a) Anordnen (S10a) der Polrohrbauteile (20, 26) auf einem Zentrierdorn; und
(b) Verbinden, insbesondere Umspritzen (S30) und/oder Vergießen, einer äußeren Mantelfläche der Polrohrbauteile (20, 26);
**gekennzeichnet durch**: Verwenden eines Zentrierdorns (10) mit einer radial ausdehnbaren, auch im gedehnten Zustand geschlossenen Zylinderoberfläche.

2. Verfahren nach Anspruch 1, **gekennzeichnet durch**:
in Schritt (a), Anordnen (S10b) der Polrohrbauteile (20, 26) auf dem Zentrierdorn (10) mit einem axialen Abstand (D) zueinander derart, dass die Polrohrbauteile (20, 26) einen für eine magnetische Trennung ausreichenden Spalt (28) bilden.

3. Verfahren nach Anspruch 1 oder 2, **gekennzeichnet durch**:
nach Schritt (a), Dehnen (S20) des Zentrierdorns (10), sodass im Bereich des Spaltes (28) eine Mantelfläche des Zentrierdorns (10) den Spalt (28) mit den jeweiligen Innenflächen der Polrohrbauteile (20, 26) versatzfrei abschließt.

4. Verfahren nach einem der Ansprüche 1 bis 3, **gekennzeichnet durch**:
in Schritt (b), Verbinden, insbesondere Umspritzen (S30) und/oder Vergießen äußerer Mantelflächen, der Polrohrbauteile (20, 26) mit einem amagnetischen Material, sodass das amagnetische Material zusammen mit den Polrohrbauteilen (20, 26) die Innenoberfläche (36) des Polrohrs (34) bildet.

5. Verfahren nach einem der Ansprüche 1 bis 4, **gekennzeichnet durch**:
Einfügen (S40) eines Polkerns (30) in eines der Polrohrbauteile (26) an einem Ende des Polrohrs (34).

6. Polrohr (34) für einen Elektromagneten (40), insbesondere für ein Magnetventil eines Automatikgetriebes in einem Kraftfahrzeug, bei dem ein amagnetisches Material einen Spalt (28) zwischen zwei Polrohrbauteilen (20, 26) ausfüllt, wobei die Polrohrbauteile (20, 26) konzentrisch zueinander angeordnet sind, wobei äußere Mantelflächen der Polrohrbauteile (20, 26) mit dem amagnetischen Material, insbesondere mit einem Kunststoff, umgossen oder umspritzt sind, und wobei das amagnetische Material zusammen mit den Polrohrbauteilen (20, 26) eine ebenflächige und versatzfreie Innenfläche (36) bildet.

7. Polrohr (34) nach Anspruch 6, **dadurch gekennzeichnet, dass** das Polrohr (34) durch Herstellung mittels eines Verfahrens gemäß einem der Ansprüche 1 bis 5 erhalten werden kann.

8. Polrohr (34) nach einem der Ansprüche 6 oder 7, **dadurch gekennzeichnet, dass** das amagnetische Material ein Kunststoff ist.

9. Polrohr (34) nach einem der Ansprüche 6 bis 8, **dadurch gekennzeichnet, dass** die Polrohrbauteile (20, 26) aus einem magnetisch leitenden Stahlwerkstoff, beispielsweise durch spanende Bearbeitung, oder als Sinterteil oder als Fließpressteil hergestellt sind.

10. Polrohr (34) nach einem der Ansprüche 6 bis 9, **dadurch gekennzeichnet, dass** ein durch das amagnetische Material im Spalt (28) gebildeter Abschnitt der Innenoberfläche (36) des Polrohrs (34) und jeweils der Teil der Innenoberfläche (36) des daran angrenzenden Polrohrbauteils (20, 26) an den jeweiligen Übergängen denselben Innendurchmesser aufweisen.

11. Polrohr (34) nach einem der Ansprüche 6 bis 10, **dadurch gekennzeichnet, dass** eines der Polrohrbauteile (26) an einem Ende des Polrohrs (34) einen Polkern (30) aufweist oder, vorzugsweise durch Fügen, mit einem Polkern (30) verbunden ist.

12. Elektromagnet (40) für ein Magnetventil, insbesondere für ein Automatikgetriebe in einem Kraftfahrzeug, mit einem Polrohr (34) nach einem der Ansprüche 6 bis 11.

13. Elektromagnet (40) nach Anspruch 12, **dadurch gekennzeichnet, dass** zwischen Polrohr (34) und einer Mantelfläche eines im Polrohr (34) angeordneten Magnetankers (54) eine Lagerfolie angeordnet ist.

14. Elektromagnet (40) für ein Magnetventil nach einem der Ansprüche 12 oder 13, **dadurch gekennzeichnet, dass** eine Spule (44), insbesondere eine Kupferdrahtwicklung, auf einem Wicklungsträger (32) angeordnet ist, der von dem die Mantelfläche der Polrohrbauteile (20; 26) umgebenden amagnetischen Material gebildet wird.

15. Vorrichtung zur Herstellung eines Polrohrs (34), mit zwei magnetischen Polrohrbauteilen (20, 26), für einen Elektromagneten (40), insbesondere für ein Magnetventil eines Automatikgetriebes in einem Kraftfahrzeug, umfassend: einen Zentrierdorn (10) zum Anordnen der Polrohrbauteile (20, 26); und eine Spritzgießform (18a, 18b), welche die auf dem Zentrierdorn angeordneten Polrohrbauteile (20, 26) umschließen kann, um die Polrohrbauteile (20, 26) durch Umspritzen und/oder Vergießen einer äußeren Mantelfläche der Polrohrbauteile (20, 26) mittels eines Spritz- oder Vergussmaterials zu verbinden;
**dadurch gekennzeichnet,**
**dass** der Zentrierdorn (10) eine radial ausdehnbare, auch im gedehnten Zustand geschlossene Zylinderoberfläche aufweist, und
**dass** die Vorrichtung eingerichtet ist, vor dem Umspritzen und/oder Vergießen den Zentrierdorn (10) radial zu dehnen, sodass im Bereich eines Spalts (28) zwischen den Polrohrbauteilen (20; 26) eine Mantelfläche des Zentrierdorns (10) den Spalt (28) mit den jeweiligen angrenzenden Innenflächen der Polrohrbauteile (20, 26) fluchtend abschließt.
